# EUROPEAN PATENT APPLICATION

(11) **EP 1 920 897 A1**
(43) Date of publication of application: **14.05.2008**
(21) Application number: 07012838.4
(22) Date of filing: 29.06.2007
(51) Int. Cl.: B29C 41/28, C08J 5/18

(54) **Silicone wrap for foodstuffs and method of making the same**

(30) Priority: 08.11.2006 US 595477
(71) Applicant: SAR HOLDINGS INTERNATIONAL LIMITED, Central Hong Kong (CN)
(72) Inventor: Yeung, Ken, Central Hong Kong (CN)
(74) Representative: Koepe, Gerd L.

(57) **Abstract**

The present invention provides a process for manufacturing a silicone wrap for foodstuffs. The steps involved are (1) making a silicone gum mixture, (2) silk-screening the silicone gum mixture on a non-stick sheet such as TEFLON, and (3) curing the silicone gum mixture on the sheet at 200 degrees C for 5 to 30 minutes. Once cured, the cured silicone gum mixture forms a thin silicone layer for foodstuffs of .3 to 1 mm.

## Description

### Technical Field

The present invention relates to a silicone wrap for foodstuffs. The present invention also relates to the preparation process of the silicone wrap for foodstuffs.

### Background

Plastic wrap and aluminum foils have been used for many years to cover foodstuffs and to protect foodstuffs from the elements so that the food may be preserved for lengths of time. The plastic industry has a hold on the market for years. There products are once use only and the waste accumulated over the years is uncountable.

What is needed is a product that can protect foodstuffs and is reusable. A product that can withstand high heat and extreme colds is also needed.

### Summary of the invention

A process for manufacturing a silicone wrap for foodstuffs comprising the steps of making a silicone gum mixture, silk-screening the silicone gum mixture on a non-stick sheet such as TEFLON, curing the silicone gum mixture on the sheet at 200 degrees C for 5 to 30 minutes, whereby the cured silicone gum mixture forms a thin silicone layer of .3 to I mm.

When the thin silicone layer is removed from the sheet, it is either (a) sold in a rolled form or (b) sold as a flat sheet. These sheets are reusable and they are easily adhered to any type of container used to store food, such as dishes, bowls, and pots, metal, plastic or other.

The thin silicone layer is able to withstand temperatures of over 500 degrees F, normal operating range for household oven and temperatures of -20 degrees F, normal operating temperature for household freezer.

### Detailed Description

A process for manufacturing a silicone wrap for foodstuffs comprising the steps of making a silicone gum mixture, silk-screening the silicone gum mixture on a non-stick sheet such as TEFLON, curing the silicone gum mixture on the sheet at 200 degrees C for 5 to 30 minutes, whereby the cured silicone gum mixture forms a thin silicone layer of .3 to 1 mm.

When the thin silicone layer is removed from the sheet, it is either (a) sold in a rolled form or (b) sold as a flat sheet. These sheets are reusable and they are easily adhered to any type of container used to store food, such as dishes, bowls, and pots, metal, plastic or other.

The thin silicone layer is able to withstand temperatures of over 500 degrees F, normal operating range for household oven and temperatures of -20 degrees F, normal operating temperature for household freezer.

The silicone mixture is formed by combining a commercial raw material of siloxane with a cross-linking agent and reacting the resultant mixture in the presence of a catalyst. For example, the solid silicone rubber 1 may be obtained by mixing diorgano-polysiloxane having an alkenyl group capable of linking to silicone with a peroxide cross-linking agent, or a platinum catalyst, and an organo-hydropolysiloxane cross-linking agent, followed by a reaction of the resultant blend.

The diorgano-polysiloxane may have an alkenyl group capable of linking to silicone, which is preferably dimethylvinylsiloxane silicone-gum with a preferred polymerization degree of 7000 to 8000. Examples of organo-hydropolysiloxane cross-linking agents that may be used with the present invention include trimethylsiloxy-capped methylhydropolysiloxane, trimethylsiloxy-capped dimethylsiloxane-methylhy-drosiloxane copolymer, and dimethylphenylsiloxy-capped methylphenylsiloxane-methylhydrosiloxane copolymer. In most embodiments, the organo-hydropolysiloxane cross-linking agent is used in an amount of about 0.1 to about 10% by weight, based on the weight of other raw materials.

The peroxide cross-linking agent used with the present invention may include benzoyl peroxide, bis(2,4-dichlorobenzoyl) peroxide, dicumyl peroxide, di-tert-butyl peroxide, sym-chlorobutyl peroxide, 2,5-dimethyl-2,5-di-tert-butylperoxy hexane, di-tert-butylperoxy peroxide, 2,5-dimethyl-2,5-bis(tert-butylperoxy) hexane or tert-butylcumyl peroxide. A preferred peroxide cross-linking agent is 2,5-dimethyl-2,5-di-tert-butylperoxy hexane, and a more preferred peroxide cross-linking agent is a peroxide cross-linking agent selected from the group of peroxide cross-linking agents having the trade names C-8, C-8A or C-8B, which are commercially available and manufactured by Shin-Etsu Silicone Co., Ltd. The amount of peroxide cross-linking agent used with the present invention may be an amount of about 0.3% to about 4% by weight, based on the weight of other raw materials in the silicone rubber 1.

Examples of a platinum catalyst, or Pt-catalyst, that may be used with the present invention include platinum black, chloroplatinic acid, platinum tetrachloride, chloroplatinic acid-olefin complex, chloroplatinic acid-methylvinylsiloxane complex or other platinum catalysts.

The process for manufacturing a silicone rubber may be achieved using different reaction mechanisms, such as the following: 2

The products of Reaction scheme A are baked at between 120 degrees. C. and 220.degree. C. for a time period of between about 1 and about 16 hours. The baked product may then be rinsed with boiling water for about 4 to about 16 hours and treated with ultrasonic energy in a 3-tank type of gas-phase ultrasonic rinsing machine, for example, an ultrasonic rinsing machine Model S&E-3036C, using an ultrasonic frequency of 28 KHz and an ultrasonic power of 21600W for about 5 to about 30 minutes, to obtain a silicon rubber to be used with embodiments of the present invention.

The products of Reaction scheme B are baked at between 120.degree. C. and 220.degree. C. for a time period of between about 1 and about 16 hours to obtain a silicone rubber to be used with embodiments of the present invention.

An examples illustrating the present invention is as follows: (This example is meant to be exemplary and are not meant to limit the scope of the present invention in any way.)

The preferred materials for preparing the present invention are any commercially available liquid silicone such as KET1001AB Liquid Silicone having as hardness of 30°-70° (material 1) and any commercially available PP film having a thickness of about 0.05mm to 1.0mm (material 2).

In the preferred embodiment the sample is approximately a 10mm x 10mm x 1mm square which needs about 0.0635g of KET1001A Liquid Silicone + 0.0635g of KET1001B Liquid Silicone.

To prepare the present invention a PP film is cut into a designed size, the size can be anywhere from 10cm X 10cm to 1,000cm X 1,000cm.

The PP film is placed on a silk screen table and fix thereto. Material 1 is then silk-screened on the surface of the PP film (Material 2). The thickness of the liquid silicone (Material 1) can be from 0.1mm to 1.0mm. (Maximum thickness can be up to 2mm if necessary).

Both materials (Material 1+2) are placed in an oven at temperature about 100°C to 180°C for 1 minute to 30 minutes. Once heated the silicone PP film is removed from the oven.

The liquid silicone (Material 1) forms a semi-hardened thin silicone layer which is adhered to the PP film (Material 2). The semi-hardened silicone layer is removed from the PP film (Material 2).

The semi-hardened silicone layer is again placed in the oven at temperate 180°C to 200°C for a "Second Curing" for about 2 hours thereby completing the silicone wrap of the present invention.

The silicone wrap of the present invention obtained according to embodiments of the processes of the present invention is non-toxic and has been tested for safety by repeatedly contacting the silicone-gum products with oily and water-containing foods in accordance with the tests of 21 C.F.R. sctn.177.2600 and the guidelines of the United States Food and Drug Administration (FDA) (the test is used to evaluate the safety of rubber products which repeatedly contact oily and water-containing foods).

The silicone-gum product of the present invention may be used as a cover for storing and/or cooking food, and as a backing for cooking and baking various foods.

A method of using the silicone-gum product according to embodiments of the present invention as a cover for food during cooking and baking involves putting formulated food materials in a dish and covering the dish with the silicone-gum product and then cooking and/or baking the covered dish. When the food is baked the silicone-gum product of the present invention can withstand the high temperatures associated with cooking and baking, such as temperatures of up to about 500 degree C.

Another method of using the silicone-gum product according to embodiments of the present invention is to cover food that is left on a counter or stored in a refrigerator or freezer. The silicone product is capable of making a seal against almost any food container.

The silicone-gum product according to some embodiments of the present invention used in storing, baking and cooking can be easily removed from the stored, cooked and/or baked food without removing the food, thus avoiding the waste of foods. In additional embodiments, the removed silicone-gum product can be used repeatedly, thus coinciding with the aim for environmental protection and preventing the further waste of plastic wrap and aluminum foil in baking processes.

The above examples are only used to illustrate but not limit the present invention. One skilled in the art can make any variations and modifications as long as these variations and modifications do not deviate from the sprits of the present invention and they are still within the scope of the present invention.

## Claims

1. A process for manufacturing a silicone wrap for foodstuffs comprising the steps of:
a. making a silicone gum mixture;
b. silk-screening the silicone gum mixture on a non-stick sheet; and
c. curing the silicone gum mixture on the non-stick sheet,
d. whereby the cured silicone gum mixture forms a thin silicone layer.

2. The process as claimed in claim 1 whereby at 200 degrees C for 5 to 30 minutes.

3. The process as claimed in claim 1 whereby the thin silicone layer has a thickness of approximately 0.3 to 1 mm.

4. The process as claimed in claim 1 further comprising the steps of:
e. removing the thin silicone layer form the non-stick sheet; and
f. rolling the thin silicone sheet into a rolled form.

5. The process as claimed in claim 1 further comprising the steps of:
e. removing the thin silicone layer form the non-stick sheet; and
f. maintaining the thin silicone sheet in a flat sheet.

6. The process as claimed in claim 1 whereby the thin silicone layer is reusable.

7. The process as claimed in claim 1 whereby the thin silicone layer removable adheres to food containers.

8. The process as claimed in claim 1 whereby the thin silicone layer is able to withstand temperatures of over 500 degrees F.

9. The process as claimed in claim 1 whereby the thin silicone layer is able to withstand temperatures of -20 degrees F.

10. The product formed from the process claimed in claim 1.
